(19) Europäisches Patentamt

European Patent Office

Office européen des brevets

(11) **EP 1 004 088 B1**

(12) **FASCICULE DE BREVET EUROPEEN**

(45) Date de publication et mention
de la délivrance du brevet:
**08.01.2003 Bulletin 2003/02**

(21) Numéro de dépôt: **98942739.8**

(22) Date de dépôt: **13.08.1998**

(51) Int Cl.$^7$: **G06F 17/60**

(86) Numéro de dépôt international:
**PCT/FR98/01804**

(87) Numéro de publication internationale:
**WO 99/009501 (25.02.1999 Gazette 1999/08)**

(54) **PROCEDE D'IMBRICATION DE PIECES ELEMENTAIRES DANS UN OU PLUSIEURS PANNEAUX A USINER**

VERFAHREN ZUM VERSCHACHTELN VON ELEMENTAREN ZUSCHNITTEN AUF EINER ODER MEHREREN VERARBEITUNGSPLATTEN

METHOD FOR INTERLEAVING ELEMENTARY PARTS INTO ONE OR SEVERAL PANELS TO BE MACHINED

(84) Etats contractants désignés:
**DE ES**

(30) Priorité: **14.08.1997 FR 9710394**

(43) Date de publication de la demande:
**31.05.2000 Bulletin 2000/22**

(73) Titulaire: **AEROSPATIALE Société Nationale Industrielle**
**75781 Paris Cédex 16 (FR)**

(72) Inventeur: **BAUDRILLARD, Gilles**
**F-92800 Puteaux (FR)**

(74) Mandataire: **Poulin, Gérard et al**
**BREVALEX**
**3, rue du Docteur Lancereaux**
**75008 Paris (FR)**

(56) Documents cités:
**EP-A- 0 594 251          US-A- 5 557 533**

- RAIDL: "Skillful Genotype Decoding in EAs for Solving the Cutting Problem" PROCEEDINGS OF THE ANNUAL CONFERENCE ON EVOLUTIONARY PROGRAMMING,29 février 1996, pages 113-120, XP002050605
- WESTKÄMPER ET AL: "3D-Schachtelungssystem für die Fertigung kleiner Frästeile aus Plattenmaterial" VDI Z., vol. 135, no. 5, 1 mai 1993, pages 32, 35-37, XP000303847 DUSSELDORF DE

# EP 1 004 088 B1

## Description

### Domaine technique

L'invention concerne un procédé d'imbrication ou de placement optimisé de pièces élémentaires de formes et de dimensions quelconques dans un ou plusieurs panneaux à usiner. Une telle opération d'imbrication ou de placement est parfois appelée "mise en panoplie".

Dans l'ensemble du texte, le terme "panneau" désigne indifféremment une tôle ou un bloc de matière de dimensions fixes et d'épaisseur quelconque, réalisé par exemple en métal, ou une bande de très grande longueur, réalisée par exemple en matériau composite. L'imbrication de pièces élémentaires s'effectue généralement sur des tôles ou des blocs de formes rectangulaires, ou sur des bandes de largeur uniforme.

Par ailleurs, le terme "panoplie" désigne un groupe de pièces élémentaires placé sur un ou plusieurs panneaux. Par extension, ce terme est aussi utilisé pour désigner un groupe de pièces élémentaires à placer.

Le procédé selon l'invention concerne le placement de pièces élémentaires sur des panneaux selon une géométrie bi-dimensionnelle. Ce placement précède des opérations d'usinage qui incluent notamment la découpe des différentes pièces imbriquées sur les panneaux. Dans le cas où les panneaux se présentent sous la forme de blocs épais, des opérations d'usinage peuvent aussi être effectuées sur les faces de ces blocs.

### Etat de la technique

Lorsque de nombreuses pièces élémentaires de formes différentes ou non doivent être réalisées en un lieu donné dans un même matériau, tel qu'un métal ou un matériau composite, il est de pratique courante de produire ces pièces par lots, en usinant plusieurs d'entre elles sur un même panneau, selon des programmes d'usinage préétablis.

Pour réaliser le placement d'un lot de pièces sur un ou plusieurs panneaux, il existe différentes techniques.

Une première technique de placement connue dite "figée", consiste à constituer les panoplies une à une manuellement à l'avance. Une intervention manuelle est alors nécessaire à la fois pour sélectionner les pièces à imbriquer, pour optimiser l'imbrication et pour vérifier les panoplies. De plus, aucune aide satisfaisante n'est disponible pour minimiser le nombre de panoplies nécessaires à la prise en compte des pièces prioritaires.

Une autre technique de placement connue, dite "semi-figée" consiste à constituer les panoplies à la demande, à partir de panoplies de base figées, préparées manuellement à l'avance. La dimension de chaque panoplie de base correspond alors, par exemple, à 1/4, 2/4, 3/4 ou 4/4 de la dimension d'un panneau standard de taille fixe. Cette technique a pour inconvénient de conduire à la fabrication de certaines pièces en un nombre supérieur à la demande.

Selon une dernière technique de placement connue, dite "souple", les panoplies sont réalisées automatiquement à la demande, une à une, par un logiciel de placement simple, puis optimisées manuellement pour minimiser les pertes de matière. Cette technique est généralement appliquée à des pièces de géométries simples et de relativement grandes dimensions. La nécessité d'une optimisation manuelle conduit à un coût de main d'oeuvre élevé et à une durée de cycle de mise en panoplie relativement longue.

Différents algorithmes ont été développés, ces dernières années, afin de trouver des solutions optimisées à des problèmes d'optimisation complexes dans de nombreux domaines théoriques, ludiques et industriels. Les algorithmes génétiques appartiennent à cette catégorie.

Le principe des algorithmes génétiques est décrit dans différents documents, parmi lesquels on citera "Genetic Algorithms in Search, Optimization and Machine Learning" de David E. Goldberg (Addison-Wesley, réédition 1989) et "Handbook of Genetic Algorithms" de Lawrence Davis (VNR Computer Library-1991).

La technique des algorithmes génétiques s'inspire des lois de l'évolution en biologie.

Les solutions à un problème sont représentées sous la forme de "chromosomes". Chaque chromosome est obtenu par un encodage de bas niveau de chacun des éléments du problème. Un chromosome est donc constitué par une structure plus ou moins compliquée telle qu'une chaîne de bits (0110...10), une liste de nombres (0,1 1,3 2....4,5), une permutation (4 3 7 1 2 5 6), etc..

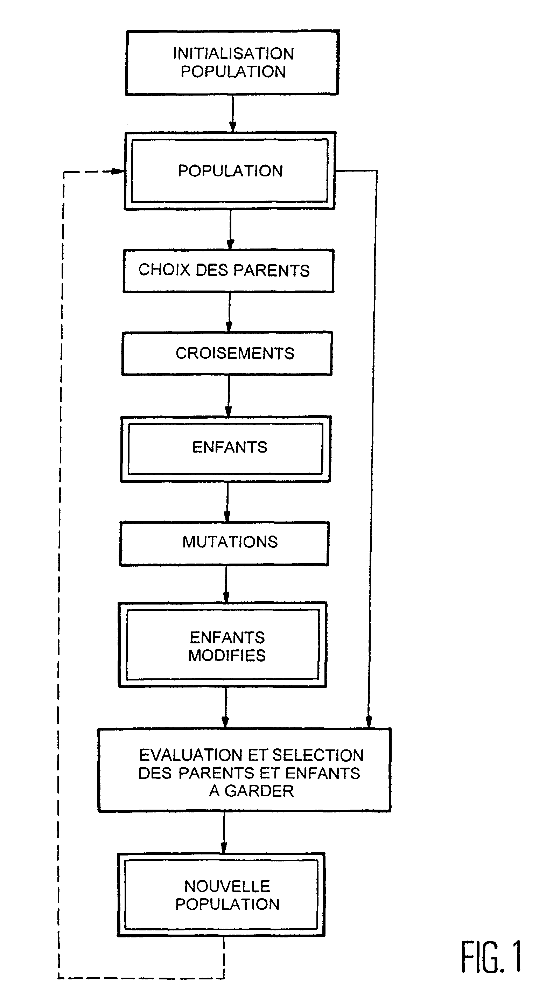

Comme l'illustre schématiquement la figure 1 des dessins annexés, un algorithme génétique part d'une "population" initiale formée d'"individus" en nombre limité. Chaque individu, représenté par un chromosome, constitue une solution possible au problème d'optimisation que l'on désire résoudre. Dans la suite on utilisera indifféremment les termes "individu" ou "chromosome" L'initialisation de la population peut être faite, par exemple, en choisissant les individus au hasard ou en prenant des solutions connues. Dans la population initiale, on choisit ensuite des "parents" entre lesquels on effectue des "croisements" ("crossover"), de façon à obtenir des "enfants". Ces derniers subissent à leur tour des "mutations", pour donner naissance à des "enfants modifiés". Les meilleurs de ces enfants ainsi que les meilleurs parents sont gardés pour former une nouvelle population. Ce cycle, répété pendant une durée adaptée en fonction du problème à résoudre, permet d'aboutir à une solution optimisée.

La mise en oeuvre de cette technique d'algorithmes génétiques impose de définir un certain nombre de fonctions et d'opérateurs qui dépendent de l'application visée.

Ainsi, le choix des parents appelés à se reproduire, de même que le choix des parents et des enfants conservés à la fin de chaque cycle, supposent que l'on puisse évaluer la qualité ("fitness") de chaque chromosome. Cette mesure de qualité est faite grâce à une fonction d'évaluation FI. Plus la valeur de cette fonction est élevée, plus le chromosome est considéré comme meilleur. La fonction d'évaluation FI varie donc dans le sens inverse de la fonction de coût F utilisée traditionnellement dans les problèmes d'optimisation. On peut prendre par exemple FI(x)=Constante-F(x). Comme dans toutes les techniques d'optimisation, le choix d'une bonne fonction de coût ou d'évaluation est capital pour l'efficacité de l'algorithme.

Pour choisir les parents, une stratégie classique consiste à effectuer un tirage au sort, en affectant à chacun des chromosomes de la population une probabilité proportionnelle à sa fonction d'évaluation. Une calibration très fine de cette fonction est alors essentielle. En effet, une fonction d'évaluation variant très peu ne biaisera pas suffisamment le choix en faveur des "bons" parents et une fonction d'évaluation trop sensible provoquera souvent le choix des mêmes parents.

Pour supprimer ce risque, on choisit souvent une méthode de classement linéaire. On classe alors les chromosomes $C_i$ par ordre croissant de leurs fonctions d'évaluation, et on affecte à chacun d'entre eux une probabilité $Pr(C_i)$ qui dépend uniquement de sa place "Place $(C_i)$" dans la liste, en appliquant la relation :

$$Pr(C_i) = \frac{A.\ Place(C_i) + B}{\sum_i (A.\ Place(C_i) + B)}\ ,$$

dans laquelle A et B sont des constantes. Dans le cas le plus simple, on prend A = 1 et B = 0.

Les techniques de croisement et de mutation sont définies par des opérateurs, appelés "opérateurs génétiques" dont le choix dépend profondément de la nature des chromosomes et du problème à traiter.

Ainsi, dans le cas des chromosomes formés de chaînes de bits, on réalise un croisement ("crossover"), par exemple en intervertissant une sous-chaîne de bits entre les deux parents. Par exemple :

- Parent 1 : (001011011) →Enfant 1 : (001001011).
- Parent 2 : (101101010) →Enfant 2 : (101111010).

Dans le cas de chromosomes formés de permutations, on réalise un croisement, par exemple en rangeant certains des éléments d'un parent dans l'ordre dans lequel ils se trouvent dans l'autre parent, et inversement. Par exemple :

- Parent 1 : (6451372) →Enfant 1 : (6451327).
- Parent 2 : (4532671) →Enfant 2 : (4512637).

Dans tous les cas, la sous-chaîne est généralement choisie au hasard et peut concerner des éléments consécutifs ou non et débuter au début ou à l'intérieur des chromosomes.

L'opérateur de croisement est considéré comme étant la caractéristique principale des algorithmes génétiques, car il accélère en général l'évolution de la population.

L'opérateur de mutation a pour effet de modifier certains des éléments du chromosome, choisis de manière aléatoire. Le nombre de ces modifications est appelé "taux de mutation" ("mutation rate"). Une valeur typique de ce taux est de 0,02, dans le cas de chromosomes formés par des chaînes de bits.

Dans le cas de chromosomes formés de chaînes de bits, un exemple de mutation est donné ci-dessous :
(0 0 1 0 1 1 0) → (0 1 1 0 0 1 0).

De façon comparable, une mutation opérée sur un chromosome formé d'une permutation est, par exemple, l'interversion de deux éléments de la permutation :
(6 4 5 1 3 7 2) → (6 4 7 1 3 5 2).

La technique des algorithmes génétiques impose également d'adopter une stratégie d'évolution de la population, c'est-à-dire de définir comment est choisie la nouvelle population à la fin de chaque cycle. La stratégie la plus efficace consiste généralement à adopter une solution intermédiaire entre les deux choix extrêmes que sont le remplacement de tous les parents par les enfants et le seul remplacement du plus mauvais parent par le meilleur enfant. La proportion adéquate est déterminée par l'expérimentation numérique de plusieurs solutions intermédiaires possibles.

# EP 1 004 088 B1

L'utilisation des algorithmes génétiques nécessite, en outre, de fixer certains paramètres tels que la taille de la population, la fréquence des croisements et des mutations, etc..

En ce qui concerne la taille de la population, un compromis doit être trouvé entre une taille trop restreinte, qui risque de conduite au bout d'un certain temps à des chromosomes qui se ressemblent tous et ont donc peu de chances d'évoluer, et une taille trop grande qui prolonge les temps de calcul et peut rendre les mécanismes de sélection des parents insuffisamment discriminants.

Par ailleurs, les croisements sont surtout importants au début du processus itératif et les mutations vers la fin. Pour cette raison, on peut diminuer progressivement le taux de croisement et augmenter progressivement le taux de mutation au cours du temps.

Il est à noter, enfin que des opérateurs génétiques autres que les opérateurs de croisement et de mutation peuvent être ajoutés au processus et que l'algorithme génétique peut être suivi, au bout d'un certain temps de calcul, d'une optimisation locale à l'aide de méthodes classiques.

Dans l'industrie, l'utilisation des algorithmes génétiques a déjà été proposée dans des domaines techniques très variés.

Ainsi, le document US-A-5 006 990 préconise de recourir à cette technique pour concevoir et fabriquer des pièces en matériau composite formées de nappes, ou "plis", superposés.

Le document US-A-5 568 590 suggère pour sa part de faire évoluer les paramètres d'un réseau neuronal utilisé pour effectuer un traitement d'image, au moyen d'un algorithme génétique.

Dans le document US-A-5 557 533, il est proposé d'utilisé des algorithmes génétiques pour optimiser le placement d'un grand nombre d'éléments logiques sur un circuit intégré. Chaque élément logique est représenté par un bloc rectangulaire de dimensions fixes et le placement est essentiellement conditionné par les impératifs d'interconnexion des composants.

Si ce dernier document envisage d'utiliser les algorithmes génétiques pour optimiser le placement d'éléments sur une surface, il s'agit d'un problème totalement différent de celui qui est posé par l'imbrication de pièces élémentaires dans des panneaux à usiner. En effet, dans ce dernier cas, la difficulté du problème à résoudre découle principalement de la complexité et de la diversité des formes des pièces, alors que la difficulté de placement des éléments dans le document US-A-5 557 533 a essentiellement pour origine leur réseau d'interconnexion. La solution décrite dans ce document n'est donc pas transposable au problème posé par l'imbrication optimisée de pièces de formes et de dimensions quelconques dans des panneaux à usiner.

L'article de RAIDL : 'Skillful Genotype Decoding in EAs for Solving the Cutting Problem' PROCEEDINGS OF THE ANNUAL CONFERENCE ON EVOLUTIONARY PROGRAMMING, 29 février 1996, pages 113-120, propose un procédé de découpe de pièces de formes arbitraires dans un panneau, visant à minimiser les chutes. Ce procédé utilise les algorithmes évolutionnistes, tels que les algorithmes génétiques, pour optimiser les solutions, ainsi qu'une fonction de décodage. La population est représentée par des génotypes qui incluent, pour chaque pièce, les coordonnées de son point central et une valeur d'orientation possible pour cette pièce, codées en binaire. Une fonction de qualité à minimiser est calculée en sommant les distances pondérées du point central de chaque pièce à un point fixe. Les recouvrements sont évités en utilisant un algorithme de placement qui déplace et positionne les pièces, l'une après l'autre. Ainsi, une pièce donnée est déplacée en ligné droite vers le point fixe, selon une parmi quatre directions possibles, jusqu'à sa venue à côté d'une autre pièce, déjà placée.

L'article de WESTKÄMPER ET AL : '3D-Schachtelungssystem für die Fertigung kleiner Frasteile aus Plattenmaterial' VDI Z., vol. 135, n° 5, 1 mai 1993, pages 32, 35-37 DUSSERLDORF DE, concerne l'usinage par fraisage, dans des panneaux épais, de plusieurs pièces tridimensionnelles imbriquées. Un programme de commande numérique est conçu de façon à permettre l'usinage complet des deux faces du panneau, à l'exception de nervures de liaison entre les pièces, aptes à être détachées par rupture après l'usinage.

Enfin le document US 5 557 533 a trait à une imbrication utilisant les algorithmes génétiques. Toutefois, cette imbrication est conditionnée par des impératifs d'interconnexion de composants électroniques.

## Exposé de l'invention

L'invention a précisément pour objet un procédé conçu pour optimiser l'imbrication de pièces élémentaires de formes et de dimensions quelconques dans un ou plusieurs panneaux à usiner, afin de limiter la quantité de matière utilisée, les temps de production (en diminuant le nombre de panneaux à usiner) et, par conséquent, le coût et afin de s'affranchir de toute intervention manuelle lors de la définition des panoplies.

Conformément à l'invention, ce résultat est obtenu au moyen d'un procédé d'imbrication de N pièces élémentaires dans au moins un panneau à usiner, dans lequel ledit procédé consiste à :

- appliquer un algorithme génétique sur une population de NP individus, représentés chacun par au moins un chromosome C constitué ainsi :

- les pièces à imbriquer sont numérotées à priori de 0 à N-1 ;

- placer les pièces dans le panneau dans l'ordre et selon l'orientation angulaire définis par le meilleur chromosome obtenu après un temps déterminé d'application dudit algorithme génétique, en utilisant un algorithme de placement donné ;

caractérisé en ce qu' un chromosome est une suite ordonnée de couples <..., (INDk, IRk),...>, k = 0,..., N-1 dans laquelle la suite des INDk, k = 0,...,N-1 est une permutation de l'ensemble {0,..., N-1}, représentant l'ordre dans lequel sont placées les pièces et IRk représente une orientation angulaire affectée à la pièce de numéro INDk, cette orientation étant choisie dans une liste des orientations admissibles pour la pièce de numéro INDk.

La prise en compte d'orientations angulaires admissibles et la détermination de l'orientation optimale pour chacune des pièces, par un algorithme génétique utilisé pour effectuer leur placement, permet d'assurer une imbrication optimisée. On minimise ainsi la quantité de matière, les temps de production et donc le coût, tout en rendant possible une automatisation complète du placement.

L'application de l'algorithme génétique inclut les opérations consistant à :

- initialiser la population ;
- définir une fonction d'évaluation FI(C) des chromosomes C ;
- calculer la fonction d'évaluation PI(C) pour chacun des NP chromosomes C ;
- classer les chromosomes C dans l'ordre des fonctions d'évaluations ;
- affecter à chacun des chromosomes C une probabilité Pr(C) proportionnelle à la place qu'il occupe ;
- choisir des parents, par tirage au sort, parmi l'ensemble des chromosomes, chaque chromosome C étant tiré au sort avec la probabilité Pr(C) ;
- effectuer des opérations de croisement des chromosomes parents, pour obtenir des chromosomes enfants ;
- effectuer des opérations de mutation des chromosomes enfants, pour obtenir des chromosomes enfants modifiés ;
- calculer les fonctions d'évaluation de chacun des chromosomes enfants modifiés ;
- conserver les N1 meilleurs chromosomes parents et les NP-N1 chromosomes enfants ;
- répéter ce cycle pendant le temps déterminé.

De préférence,, le nombre NP des chromosomes constituant la population et le nombre N1 des chromosomes parents conservés à la fin de chaque cycle sont choisis dans le groupe comprenant : NP = 8, N1 = 4 NP = 12, N1 = 4 ; NP = 12, N1 = 8 ; NP = 20, N1 = 8 ; NP = 20, N1 = 12 ; NP =30, N1 = 10 et NP = 30, N1 = 15.

Pour initialiser la population, on tire au sort chaque suite <..., INDk,...> parmi les permutations de l'ensemble {0,...,N-1}, et on tire au sort chaque IRk dans la liste des orientations admissibles pour la pièce de numéro INDk.

Avantageusement, on effectue une opération de croisement en sélectionnant deux sous-suites S1, S2 dans deux chromosomes parents choisis C1, C2, en plaçant les numéros INDk des pièces de la sous-suite S1 dans l'ordre occupé par les mêmes numéros dans le chromosome C2, en procédant de même pour les numéros INDk' des pièces de la sous-suite S2, en utilisant le chromosome C1, et en associant, par tirage au sort, à chacune des pièces des sous-suites S1 et S2, l'un des numéros d'orientation angulaire associés à ce numéro de pièce dans les chromosomes parents C1, C2.

En l'absence de contraintes particulières, on sélectionne des sous-suites occupant les mêmes positions dans chacun des deux chromosomes.

Par ailleurs, on effectue de préférence une opération de mutation en inversant au moins deux numéros INDk et INDk' des pièces d'un même chromosome, et en affectant chaque numéro de pièce ainsi inversé d'un nouveau numéro d'orientation angulaire admissible pour cette pièce. Les numéros INDk, INDk' des pièces d'un même chromosome, sur lesquels sont effectués les opérations de mutation, de même que les nouveaux numéros d'orientation angulaire IRk, IRk', sont tirés au sort.

Chacune des opérations de mutation peut être répétée plusieurs fois sur un même chromosome.

L'algorithme de placement peut prendre des formes diverses, sans sortir du cadre de l'invention. Par exemple, on peut utiliser un algorithme de placement selon lequel chaque pièce est placée le plus haut et le plus à gauche possible, dans l'ordre indiqué par la suite des INDk.

L'application de l'algorithme génétique est précédée d'une étape de mémorisation des contours des pièces, des contours du panneau et des orientations angulaires admissibles pour chacune des pièces. Les contours mémorisés des pièces et des panneaux sont ensuite utilisés lors du placement des pièces par l'algorithme de placement.

Les contours des pièces élémentaires à imbriquer sont définis à partir des formes des pièces à réaliser, en ajoutant des marges de sécurité, pour tenir compte des contraintes technologiques du procédé d'usinage.

Dans une première forme de réalisation de l'invention, le procédé est appliqué à l'imbrication de pièces en matériau composite. Dans ce cas, on imbrique les N pièces élémentaires dans un seul panneau de très grande longueur. On utilise alors, par exemple, une fonction d'évaluation FI(C) définie par FI(C)=-F(C), où F(C) est une fonction de coût correspondant à la longueur utilisée du panneau. Plus cette longueur est faible, meilleur est le résultat.

Dans une deuxième forme de réalisation de l'invention, le procédé est appliqué à l'imbrication de pièces métalliques. On imbrique alors les N pièces élémentaires dans plusieurs panneaux identiques, généralement rectangulaires. Dans ce cas, on utilise par exemple une fonction d'évaluation correspondant au taux de remplissage moyen des panneaux. Plus ce taux est élevé, meilleur est le résultat. Des contraintes de fabrication peuvent éventuellement conduire à interdire l'imbrication dans certaines zones des panneaux.

Dans la deuxième forme de réalisation de l'invention, on utilise un algorithme de placement selon lequel chaque pièce est placée prioritairement dans un premier panneau d'un ensemble de panneaux déjà créés, considérés dans l'ordre de leur création et, à défaut, dans un nouveau panneau créé à cet effet.

Dans ce cas, il peut arriver qu'au moins un ensemble de pièces élémentaires identiques soit regroupé sous forme d'un "dossier" et on peut éventuellement imposer que toutes les pièces de ce dossier soient placées à l'intérieur d'un même panneau.

On utilise alors un algorithme de placement selon lequel les pièces élémentaires d'un même dossier sont placées consécutivement dans l'ordre déterminé par le chromosome, jusqu'à l'épuisement de toutes les pièces du dossier considéré. Si le placement de toutes les pièces peut être fait sur un même panneau, il est automatiquement validé. En revanche, si un panneau est rempli alors que toutes les pièces d'un même dossier n'ont pas été placées, un nouveau panneau est automatiquement créé et toutes les pièces déjà placées sont enlevées du panneau précédent, pour être placées sur le nouveau panneau, en respectant l'ordre déterminé par le chromosome considéré.

Lorsque des dossiers existent, toutes les pièces d'un même dossier reçoivent des numéros consécutifs, lors de la numérotation à priori, de manière à ce qu'elles restent consécutives dans les chromosomes, tout au long du processus de calcul. Lorsqu'on initialise la population, on impose alors que toutes les pièces d'un même dossier restent consécutives dans la permutation représentée par les INDk.

En présence de dossiers, on impose que les sous-suites extraites en vue des croisements ne contiennent que des dossiers entiers, de manière à garder les pièces d'un même dossier consécutives à l'intérieur d'un chromosome.

Lorsque des dossiers existent, les mutations sont effectuées en inversant deux groupes de numéros consécutifs ne contenant que des dossiers, de manière à garder les pièces d'un même dossier consécutives à l'intérieur d'un chromosome.

Le procédé selon l'invention peut aussi prendre en compte le degré d'urgence des pièces élémentaires à fabriquer. Ainsi, ces pièces peuvent être classées en "pièces prioritaires" et "pièces non prioritaires". On applique alors l'algorithme génétique sur une population dont chaque individu comprend un premier chromosome représentant les pièces prioritaires et un deuxième chromosome représentant les pièces non prioritaires.

**Brève description des dessins**

On décrira à présent, à titre d'exemple non limitatif, une forme de réalisation de l'invention, en se référant aux dessins annexés, dans lesquels :

- la figure 1, déjà décrite, illustre schématiquement le principe des algorithmes génétiques ;
- la figure 2 illustre schématiquement l'encodage de différentes pièces à imbriquer, conformément à l'invention, en l'absence de dossier ;
- la figure 3 illustre schématiquement l'application d'un algorithme de placement sur un chromosome obtenu après encodage des pièces de la figure 2, en l'absence de dossier ;
- la figure 4 montre l'effet de l'opérateur de croisement sur un couple de chromosomes, en l'absence de dossier ; et
- la figure 5 montre l'effet de l'opérateur de mutation sur un chromosome, en l'absence de dossier.

**Description d'une forme de réalisation**

L'imbrication optimisée, selon une géométrie bidimensionnelle, de pièces de formes diverses dans des panneaux généralement rectangulaires est assurée conformément à l'invention en utilisant un algorithme génétique qui prend en compte différentes orientations possibles pour chacune des pièces.

L'invention s'applique à la fabrication de pièces de nature quelconque. En particulier et de façon non limitative, on citera les pièces métalliques et les pièces en matériau composite.

Les pièces à imbriquer peuvent être aussi bien des pièces minces, telles que des tôles métalliques ou des bandes de tissu composite, que des pièces épaisses imbriquées dans un bloc massif selon une géométrie bidimensionnelle. Dans ce dernier cas, des usinages peuvent éventuellement être prévus sur chacune des faces du bloc.

Dans un souci d'efficacité, de telles pièces sont produites par lots, c'est-à-dire que plusieurs pièces sont usinées dans un même panneau ou bloc de matière. Dans la forme de réalisation décrite, on réalise les pièces métalliques à partir de panneaux rectangulaires de dimensions (longueur et largeur) données et constantes, et on réalise les pièces en matériau composite à partir d'une bande de largeur constante et de très grande longueur. Dans le premier cas, le procédé selon l'invention permet de limiter le nombre de panneaux nécessaires à la fabrication des pièces. Dans le second cas, le procédé selon l'invention minimise la longueur de bande utilisée. On réalise ainsi un gain de matière et une diminution du temps de production, synonymes de réduction des coûts.

Pour déterminer le contour de chacune des formes des pièces élémentaires à imbriquer, on part des formes finales des pièces à réaliser, et on y ajoute des marges pour tenir compte de certaines contraintes technologiques de fabrication. Ces opérations préliminaires peuvent notamment être effectuées par des logiciels connus, qui ne font pas partie de l'invention. Il n'en sera donc fait aucune description détaillée.

Lorsqu'il est déterminé, le contour de chacune des pièces élémentaires à imbriquer est mis en mémoire, de même que certaines autres données nécessaires à la mise en panoplie de ces pièces et qui vont à présent être décrites.

Ainsi, on mémorise également les contours des panneaux dans lesquels doivent impérativement être placées les pièces élémentaires à imbriquer, c'est-à-dire la longueur et la largeur dans le cas de panneau rectangulaires et la largeur seule dans le cas d'un panneau de longueur illimitée. Le cas échéant, cette mémorisation peut prendre en compte l'existence de certaines zones des panneaux dans lesquelles l'imbrication doit être interdite.

Pour chacune des pièces, on détermine et on met aussi en mémoire différentes orientations angulaires admissibles. Ces orientations angulaires admissibles dépendent de la forme de la pièce à réaliser. Par exemple, dans le cas de pièces en matériau composite incluant des fibres longues qui doivent présenter certaines orientations particulières par rapport à la géométrie de la pièce, les orientations angulaires admissibles prennent également en compte les orientations des fibres dans le panneau.

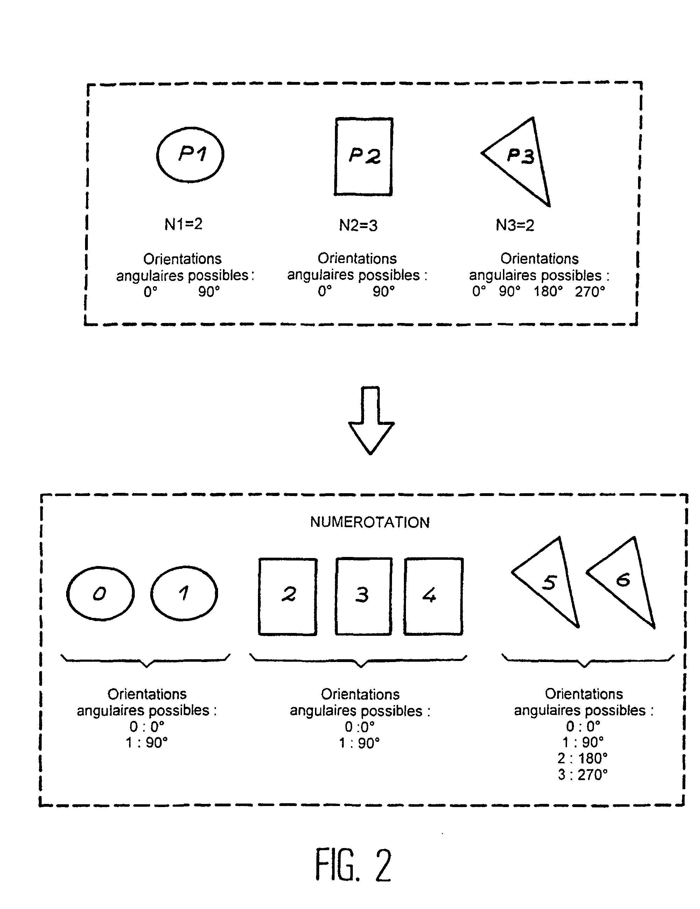

Un premier exemple de mise en oeuvre du procédé selon l'invention va à présent être décrit en se référant aux figures 2 à 5. Dans cet exemple, toutes les pièces à placer sont considérée individuellement, c'est-à-dire qu'elles peuvent être placées dans un ordre quelconque et qu'aucun groupement de pièces n'est imposé, bien que certaines des pièces à placer aient des formes identiques.

Dans le haut de la figure 2, on a représenté une panoplie de pièces élémentaires à imbriquer. Dans cet exemple particulièrement simple, la panoplie comprend N1 pièces identiques de forme ovale, référencées P1, N2 pièces identiques de forme rectangulaire, référencées P2, et N3 pièces identiques de forme triangulaire, référencées P3. Plus généralement, une panoplie de pièces élémentaires à fabriquer est constituée par une liste de couples <Pi, Ni> où Pi est la référence d'une pièce de forme donnée et Ni le nombre des pièces de référence Pi. Le nombre total des pièces à imbriquer, ou à mettre en panoplie, est donc

$$N = \sum_i Ni .$$

Dans l'exemple illustré sur la figure 2, on affecte à chacune des pièces référencées P1 et P2 deux orientations angulaires admissibles (0° et 90°) et on affecte à chacune des pièces référencées P3 quatre orientations angulaires admissibles (0°, 90°, 180° et 270°). L'orientation 0° est celle qui est illustrée sur la figure. Les autres orientations sont obtenues par des rotations des pièces dans un sens déterminé (par exemple horaire) autour de leurs centres de gravité, de l'angle correspondant, à partir de l'orientation représentée.

Pour créer les chromosomes sur lesquels va opérer l'algorithme génétique, on effectue un encodage préliminaire. Cet encodage concerne les pièces en elles-mêmes, ainsi que leurs orientations angulaires admissibles.

L'encodage des pièces est réalisé en les numérotant 0, 1, ..., N1-1 pour les N1 pièces référencées P1 ; N1, N1 + 1, ..., N1 + N2-1 pour les N2 pièces référencées P2 ; etc.. Dans l'exemple simplifié de la figure 2, la numérotation des pièces selon ce principe est illustrée dans le bas de la figure.

L'encodage des orientations angulaires admissibles est réalisé en les numérotant 0, 1, ..., M1-1 pour les M1 orientations angulaires admissibles pour chacune des pièces P1 ; 0, 1, ..., M2-1 pour les M2 orientations angulaires admissibles pour chacune des pièces P2 ; etc.. La numérotation des orientations angulaires admissibles, effectuée selon ce principe, est représentée dans le bas de la figure 2.

On initialise ensuite la population de l'algorithme génétique en choisissant les individus de départ, dont chacun est représenté par un chromosome Ci.

Plus précisément, sur la base de l'encodage précédemment décrit, on forme des chromosomes Ci constitués chacun par une suite ordonnée de couples <..., (INDk,IRk),...>, k=0, ..., N-1, où INDk est un numéro de pièce à imbriquer et IRk un numéro d'orientation angulaire affecté à la pièce de numéro INDk, cette orientation étant choisie dans la liste des orientations angulaires admissibles pour cette pièce. La suite <..., INDk, ...>, k=0, ..., N-1 est une permutation de l'ensemble {0,1, ...,N-1}, qui représente l'ordre dans lequel sont placées les pièces. Ainsi, chaque pièce à imbriquer figure une fois dans chaque chromosome Ci.

Dans chacun des chromosomes Ci constituant la population initiale, la place de chaque numéro de pièce INDk est tirée au sort, de même que le numéro d'orientation angulaire IRk.

Le nombre NP des chromosomes Ci constituant la population initiale a été choisi égal à 8, 12, 20 et 30 dans les différentes expérimentations numériques qui ont été effectuées.

De plus, il a été décidé de maintenir la taille de la population à la valeur constante NP et d'essayer sept combinaisons différentes en ce qui concerne la stratégie de reproduction. Cette stratégie consiste à garder les N1 meilleurs parents et les NP-N1 meilleurs enfants à la fin de chaque cycle. Les sept combinaisons testées sont les suivantes :

$$NP = 8 ; N1 = 4$$

$$NP = 12 ; N1 = 4$$

$$NP = 12 ; N1 = 8$$

$$NP = 20 ; N1 = 8$$

$$NP = 20 ; N1 = 12$$

$$NP = 30 ; N1 = 10$$

et

$$NP = 30 ; N1 = 15$$

Sur la base d'une population de départ de 8, 12, 20 ou 30 chromosomes dans la forme de réalisation décrite, on définit la fonction d'évaluation FI(C) de ces chromosomes.

Dans la pratique, le choix de la fonction d'évaluation FI(C) dépend du type de pièces dont on désire optimiser le placement.

Ainsi, dans une première forme de réalisation de l'invention qui concerne des pièces en matériau composite, l'imbrication de ces pièces s'effectue dans un seul panneau de largeur constante et de très grande longueur. On détermine alors une fonction de coût F(C) correspondant à la longueur L utilisée du panneau. Dans ce cas, la fonction d'évaluation FI(C) est définie par la relation FI(C) = -F(C). Plus la fonction d'évaluation est grande (c'est-à-dire plus la longueur L de panneau utilisée est faible), meilleur est le résultat.

Dans une deuxième forme de réalisation de l'invention, qui concerne des pièces métalliques, ces pièces sont imbriquées dans plusieurs panneaux rectangulaires identiques. La fonction d'évaluation FI(C) est alors définie comme correspondant au taux de remplissage moyen des panneaux. Ainsi, comme dans le cas des pièces en matériau composite, plus la fonction d'évaluation est grande, meilleur est le résultat.

Dans tous les cas, la valeur de la fonction d'évaluation affectée à chaque chromosome dépend de l'algorithme de placement utilisé. Cet algorithme de placement peut prendre différentes formes, sans sortir du cadre de l'invention.

A titre d'illustration, on utilise par exemple un algorithme de placement selon lequel chaque pièce INDk, orientée angulairement de la valeur correspondant au numéro IRk, est placée le plus en haut et le plus à gauche possible. Plus précisément, chaque pièce est placée prioritairement le plus à gauche possible et, secondairement, le plus haut possible.

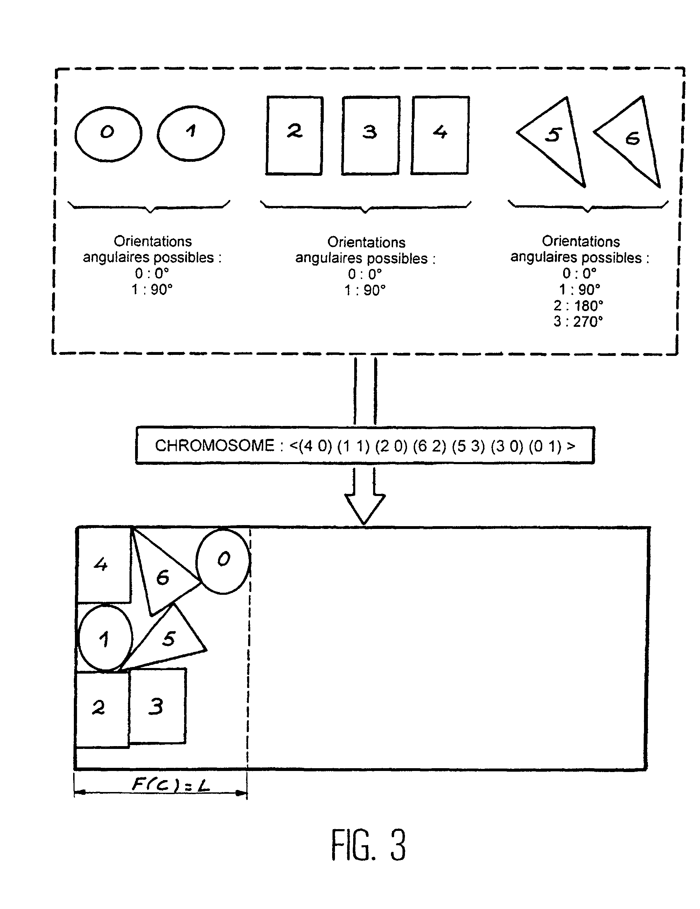

Dans l'exemple particulièrement simple décrit précédemment en se référant à la figure 2, l'application de cet algorithme de placement sur le chromosome <(4 0) (1 1) (2 0) (6 2) (5 3) (3 0) (0 1)>, obtenu à partir de la panoplie illustrée dans le haut de la figure 3, conduit à l'imbrication représentée dans le bas de cette figure, dans le cas de pièces en matériau composite à placer sur un panneau unique 10 de grande longueur. Comme on l'a indiqué précédemment, on détermine alors la fonction de coût F(C) égale à la longueur L et la fonction d'évaluation FI(C) égale à -L.

Des calculs analogues effectués sur chacun des chromosomes de la population initiale permettent de déterminer la fonction d'évaluation de chacun d'entre eux.

Lorsque plusieurs panneaux rectangulaires sont utilisés, comme c'est notamment le cas pour les pièces métalliques, une pièce donnée ne peut être à cheval sur plusieurs panneaux. Tant que les pièces peuvent être imbriquées sur un premier panneau, le processus reste inchangé. Dès qu'une pièce ne peut être placée sur ce premier panneau, un deuxième panneau est créé à la droite du précédent et la pièce y est placée en respectant l'algorithme de placement précité. Le placement des pièces suivantes est effectué en plaçant prioritairement chacune d'entre elles sur le premier panneau ou, à défaut sur le deuxième panneau. Si la pièce ne peut être placée sur aucun des panneaux existants, un troisième panneau est créé à la droite du deuxième. Ainsi, de nouveaux panneaux sont progressivement créés et toute nouvelle pièce est placée prioritairement sur un premier des panneaux déjà créés, examinés dans l'ordre de leur création et, à défaut, sur un nouveau panneau créé à cette occasion.

Dans ce dernier cas où le placement des pièces est fait sur des panneaux rectangulaires, la fonction d'évaluation FI(C) correspond au taux moyen de remplissage des panneaux, comme on l'a déjà indiqué.

Dans la forme de réalisation préférée décrite, le choix des parents dans la population de départ est effectué en utilisant une méthode de classement linéaire. Ainsi, on classe les chromosomes Ci dans l'ordre des fonctions d'évaluation FI(Ci) croissantes, et on leur affecte une probabilité Pr(Ci) qui dépend uniquement de leur place dans la liste ainsi obtenue.

Les expérimentations numériques ont été faites en utilisant la relation :

$$Pr(Ci) \ = \ \frac{Place(Ci)}{\displaystyle\sum_{i} Places(Ci}$$

A titre d'exemple, dans le cas d'une population de départ constituée de 12 chromosomes, les probabilités de chacun d'entre eux s'échelonnent alors de 1/78 pour celui qui présente la fonction d'évaluation la plus faible à 12/78 pour celui qui présente la fonction d'évaluation la plus élevée.

En appliquant à chacun des chromosomes de la population de départ la probabilité ainsi fixée, on procède par tirage au sort pour choisir deux parents sur lesquels est appliqué un opérateur de croisement de l'algorithme génétique.

Dans le premier exemple de réalisation décrit en référence aux figures 2 à 5, l'opérateur de croisement sélectionne, par tirage au sort, deux sous-suites S1 et S2 occupant les mêmes positions dans les chromosomes parents C1 et C2. Cet opérateur permute ensuite les éléments de la sous-suite S1 afin qu'ils apparaissent dans le même ordre relatif que dans le chromosome C2. De même, l'opérateur de croisement permute les éléments de la sous-suite S2 pour qu'ils apparaissent dans le même ordre relatif que dans le chromosome C1. Enfin, l'opérateur de croisement associe, par tirage au sort, à chacune des pièces des sous-suites S1 et S2, l'un des numéros d'orientation angulaire associés à ce numéro de pièce dans les deux chromosomes parents C1 et C2. Il est à noter que le tirage au sort des sous-suites est totalement aléatoire, de sorte que les éléments qui les constituent peuvent être consécutifs ou non et que leur nombre peut être variable.

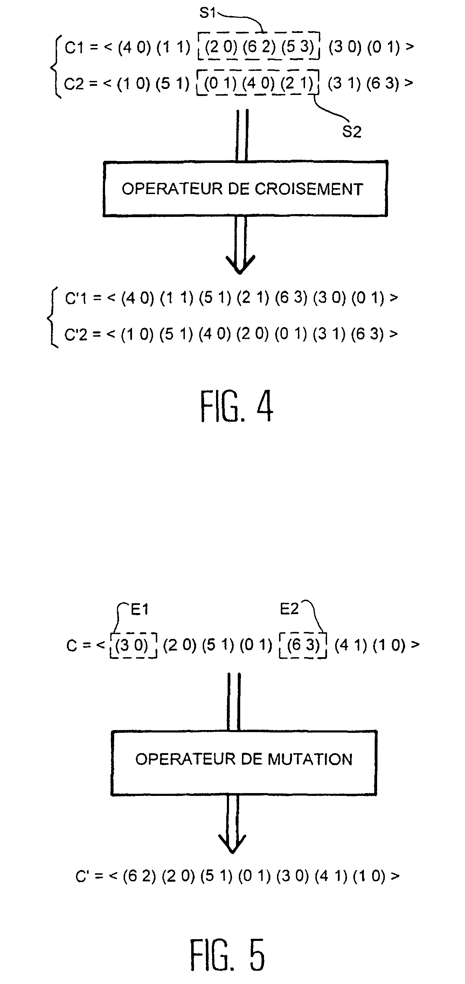

Le fonctionnement de l'opérateur de croisement va à présent être illustré sur un exemple, en se référant à la figure 4.

Les deux chromosomes parents sélectionnés sont, dans ce cas :

C1 = <(4 0) (1 1) (2 0) (6 2) (5 3) (3 0) (0 1)>

et

C2 = <(1 0) (5 1) (0 1) (4 0) (2 1) (3 1) (6 3)>.

La mise en oeuvre de l'opérateur de croisement conduit par exemple à choisir comme sous-suites S1 et S2 les troisième, quatrième et cinquième éléments de chaque chromosome, soit :

S1 = (2 0) (6 2) (5 3)

et

$$S2 = (0\ 1)\ (4\ 0)\ (2\ 1).$$

L'opérateur effectue ensuite les permutations précitées, ce qui conduit à la création de deux chromosomes enfants C'1 et C'2 :

$$C'1 = <(4\ 0)\ (1\ 1)\ (5\ 3)\ (2\ 0)\ (6\ 3)\ (3\ 0)\ (0\ 1)>$$

et

$$C'2 = <(1\ 0)\ (5\ 1)\ (4\ 0)\ (2\ 0)\ (0\ 1)\ (3\ 1)\ (6\ 3)>.$$

La mise en oeuvre de l'algorithme génétique se traduit ensuite par l'application d'un opérateur de mutation sur les chromosomes enfants créés par l'opérateur de croisement, selon un taux de mutation donné. Ce taux de mutation, au moins égal à 2, détermine la fréquence de répétition de cette opération à chaque cycle.

Dans l'exemple de réalisation illustré sur les figures 2 à 5, l'opérateur de mutation tire au sort deux éléments du chromosome, avant de les intervertir. Il affecte ensuite une nouvelle orientation angulaire à chacun de ces deux éléments, par tirage au sort parmi les orientations angulaires admissibles pour chacun de ces éléments. De façon générale, cette opération peut être illustrée schématiquement par :

$$<..., (IND_{k1}, IR_{k1}),..., (IND_{k2}, IR_{k2}),...> \rightarrow <..., (IND_{k2}, IR_{k2}'),..., (IND_{k1}, IR_{k1}'),...>.$$

A titre d'exemple, et comme l'illustre la figure 5, si le chromosome initial est :

$$C = <(3\ 0)\ (2\ 0)\ (5\ 1)\ (0\ 1)\ (6\ 3)\ (4\ 1)\ (1\ 0)>,$$

et si l'opérateur de mutation tire au sort le premier E1 et le cinquième E2 éléments de ce chromosome, celui-ci devient, après un nouveau tirage au sort des orientations angulaires des deux éléments considérés :

$$C' = <(6\ 2)\ (2\ 0)\ (5\ 1)\ (0\ 1)\ (3\ 0)\ (4\ 1)\ (1\ 0)>.$$

A la fin de chaque cycle mettant en oeuvre les deux opérateurs précités, l'algorithme génétique réinitialise la population sur la base de la stratégie de reproduction définie précédemment, c'est-à-dire en gardant les N1 meilleurs parents et les NP-N1 meilleurs enfants, de façon à maintenir la population à une taille constante de 8, 12, 20 ou 30 individus.

Le choix des meilleurs parents et des meilleurs enfants est effectué en calculant leurs fonctions d'évaluation, de la manière indiquée.

Le cycle se répète de nombreuses fois, jusqu'à l'écoulement d'un temps de calcul déterminé, fixé à l'avance. Les expérimentations effectuées montrent que de bons résultats peuvent être obtenus au bout d'un temps relativement court.

A la fin de ce temps de calcul, on choisit le meilleur des chromosomes de la population restante, toujours à partir des fonctions d'évaluation de ces chromosomes, et on imbrique les pièces dans le ou les panneaux en suivant l'ordre et l'orientation fixés par ce meilleur chromosome. Un placement optimal et entièrement automatisé est ainsi assuré.

Les données relatives à l'imbrication optimale des pièces obtenues par la mise en oeuvre du procédé selon l'invention sont transmises aux machines d'usinage sous une forme quelconque, adaptée aux caractéristiques de ces machines et à la nature des pièces à fabriquer. On réalise ainsi un gain de temps et une économie de matière qui contribuent à réduire le coût de fabrication des pièces.

La description qui vient d'être faite en référence aux figures 2 à 5 concerne le cas dans lequel les pièces peuvent être placées dans un ordre quelconque et indifféremment sur n'importe quel panneau.

Dans la pratique, des situations différentes peuvent se présenter, qui se traduisent généralement par des contraintes supplémentaires dans le déroulement de l'algorithme génétique.

L'une de ces situations concerne le cas où les pièces à placer comprennent des ensembles de pièces élémentaires identiques, regroupés sous forme de dossiers, et où l'on impose que toutes les pièces de chaque dossier soient placées sur un même panneau.

L'application de l'algorithme génétique s'effectue alors, de façon générale, de la manière décrite précédemment, sauf pour certains aspects qui vont à présent être précisés.

Un premier aspect concerne l'encodage préliminaire des pièces, c'est-à-dire leur numérotation a priori. En effet, cette numérotation s'effectue alors, impérativement, de façon telle que toutes les pièces d'un même dossier soient numérotées consécutivement.

L'algorithme est également adapté afin que toutes les pièces d'un dossier restent consécutive tout au long du processus de calcul.

Ainsi, lors de l'initialisation de la population, le tirage au sort de chaque suite des INDk est effectué en imposant que toutes les pièces d'un même dossier restent consécutives dans la permutation représentée par les INDk.

L'existence de dossiers est également prise en compte par l'algorithme de placement. Ainsi, les pièces d'un dossier déjà placées sur un premier panneau sont automatiquement retirées et placées sur un nouveau panneau, dans l'ordre où elles se trouvent dans le chromosome considéré, lorsque l'une quelconque des pièces de ce dossier impose la création d'un nouveau panneau.

Par ailleurs, l'application de l'opérateur de croisement sur des chromosomes incluant des dossiers se distingue de la description qui a été faite en référence à la figure 4 par le fait que chacune des sous-suites faisant l'objet des croisements ne contiennent que des dossiers entiers. Les nouvelles orientations sont déterminées, par ailleurs, de la manière décrite précédemment.

Enfin, l'application de l'opérateur de mutation sur un chromosome incluant des dossiers ne diffère de la description faite précédemment à la figure 5 que par le fait qu'au lieu d'inverser simplement deux numéros de pièces, on inverse deux groupes de numéros consécutifs ne contenant que des dossiers entiers. Les nouvelles orientations sont tirées au sort parmi les orientations angulaires admissibles pour chacune des pièces, comme précédemment.

Une autre situation imposant des contraintes particulières concerne le cas où les pièces à fabriquer présentent des degrés d'urgence différents. Ainsi, les pièces à fabriquer peut être classées, par exemple, en "pièces prioritaires" et "pièces non prioritaires", ces dernières devant impérativement être placées après les pièces prioritaires.

Dans ce cas, la numérotation a priori est faite de façon telle que toutes les pièces non prioritaires sont numérotées après les pièces prioritaires.

De plus, cette hiérarchie est préservée tout au long du calcul. A cet effet, chaque individu de la population peut être représenté par deux chromosomes consécutifs représentant respectivement les pièces prioritaires et les pièces non prioritaires. L'algorithme génétique s'applique alors séparément à chacun de ces deux chromosomes, de la manière qui a été décrite précédemment en se référant aux figures 2 à 5. Toutefois, dans ce cas, l'algorithme de placement ne place les pièces non prioritaires que dans la mesure où elles améliorent la fonction d'évaluation (taux de remplissage moyen). Si une hiérarchie plus complexe des pièces est imposée, le nombre des chromosomes représentatifs de chaque individu de la population est supérieur à deux.

De nombreuses expérimentations numériques, matérialisées par plus de 2000 heures de calcul, ont été effectuées sur la base de pièces existantes de formes, de tailles et de natures variées actuellement fabriquées dans différentes usines.

Une première expérimentation a concerné des panoplies de tissu composite découpées par jet d'eau dans un tissu de largeur fixe (130mm) et de très grande longueur (50 m). Les essais ont été conduits sur six panoplies nommées P17D01, P17D03, P17I01, P17I02, P17I03, P17T01, pour lesquelles le résultat de l'imbrication manuelle était connu. La distance minimale entre deux découpes était de 5 mm et l'orientation angulaire devait être un multiple de 90°, augmenté éventuellement d'un angle fixe.

Dans un premier temps, on a fait "tourner" l'algorithme génétique pendant une période très longue, pour vérifier sa capacité à produire de bons résultats. Un seul essai a été fait pour chaque panoplie, en prenant comme paramètrage de population NP = 12 et N1 = 4.

Les résultats comparatifs, par rapport au placement manuel effectué actuellement, sont donnés dans le Tableau I.

Tableau I

| | Longueur de tissu (mm) | | | |
|---|---|---|---|---|
| PANOPLIE | Manuel | Alg.gen. | Gain (%) | Temps (h) |
| P17D01 | 10000 | 8250 | 18 | 50 |
| P17D03 | 3200 | 2735 | 15 | 16 |
| P17I01 | 10000 | 7775 | 22 | 27 |
| P17I02 | 8540 | 7420 | 13 | 11 |

Tableau I   (suite)

| | Longueur de tissu (mm) | | | |
|---|---|---|---|---|
| PANOPLIE | Manuel | Alg.gen. | Gain (%) | Temps (h) |
| P17103 | 3610 | 2925 | 19 | 10 |
| P17T01 | 4570 | 3265 | 29 | 34 |

Cette première série d'expérimentations confirme que l'utilisation des algorithmes génétiques apporte une optimisation considérable (jusqu'à 29 %) de la quantité de tissu utilisé.

Dans un deuxième temps, le placement de chacune des panoplies a été effectué avec six des sept types de populations envisagés précédemment pour l'algorithme génétique, c'est-à-dire NP = 12, N1 = 4 ; NP = 12, N1 = 8 ; NP = 20, N1 = 8 ; NP = 20, N1 = 12 ; NP = 30, N1 = 10 et NP = 30, N1 = 15. De plus, le calcul a été effectué cinq fois dans chaque cas, afin d'obtenir des résultats statistiquement plus significatifs. Il y a donc eu trente calculs effectués pour chaque panoplie. Enfin, la durée de chaque calcul a été ramenée à des valeurs beaucoup plus courtes que dans la première série d'essais. Le meilleur résultat obtenu pour chaque panoplie est donné dans le Tableau II.

TABLEAU II

| | Longueur de tissu (mm) | | Population | | | |
|---|---|---|---|---|---|---|
| PANOPLIE | Manuel | Alg. gen. | NP | Ni | Gain (%) | Temps (min) |
| P17D01 | 10000 | 8590 | 12 | 8 | 14 | 120 |
| P17D03 | 3200 | 2715 | 20 | 12 | 15 | 30 |
| P17I01 | 10000 | 8020 | 12 | 8 | 20 | 120 |
| P17I02 | 8540 | 7815 | 12 | 4 | 8 | 120 |
| P17I03 | 3610 | 3155 | 12 | 4 | 13 | 60 |
| P17T01 | 4570 | 3430 | 12 | 8 | 25 | 60 |

Cette deuxième série d'essais montre que, même avec des temps de calcul réduits, on obtient de meilleurs résultats que dans le cas d'une imbrication manuelle.

Une deuxième expérimentation a été faite sur des panoplies de pièces métalliques de formes généralement simples, répétitives et de grandes dimensions, à placer dans des panneaux rectangulaires de dimensions fixes. Actuellement, ces panoplies sont réalisées automatiquement et optimisées manuellement pour minimiser les pertes de matière. Les essais ont été conduits sur quatre panoplies P1 (formée de deux types de pièces E6S et E6), P2 (formée d'un seul type de pièces E1), P3 (formée d'un seul type de pièces E3) et P4 (formée de cinq types de pièces E7, E8, E2, E4 et E5) en respectant les contraintes suivantes :

- distance minimale entre deux pièces = 0 mm ;
- orientation angulaire : multiple de 90°.

Une première série d'essais visait à démontrer que le procédé selon l'invention permettait, en quelques secondes et de façon entièrement automatisée, de faire aussi bien et parfois mieux que le procédé de placement utilisé actuellement, impliquant une intervention manuelle. Les résultats sont données dans le Tableau III.

Tableau III

| | Nombre de pièces/panneau | | |
|---|---|---|---|
| PANOPLIE | Manuel | Alg. gen. | Temps (s) |
| P1 | 6E6S-4E6 | 6E6S-4E6 | 43 |
| P2 | 20E1 | 20E1 | 35 |
| P3 | 11E3 | 11E3 | 3 |
| P4 | 1E7-3E8-6E2 4E4-7E5 | 1E7-3E8-6E2 4E4-7E5 | 47 |

Dans le cas des panoplies P2 et P3 mono-pièce, une amélioration a été tentée en augmentant légèrement la durée du calcul. Comme l'illustre le Tableau IV, on a ainsi pu placer 21 exemplaires de la pièce E1 au lieu de 20 sur la panoplie P2, et 12 exemplaires de la pièce E3 au lieu de 11, sur la panoplie P3. Dans ce dernier cas, une tentative pour placer 13 exemplaires de la pièce E3 a échoué.

Tableau IV

| | Nombre de pièces/panneau | | |
|---|---|---|---|
| PANOPLIE | Manuel | Alg. gen. | Temps (s) |
| P2 | 20E1 | 21E1 | 240 |
| P3 | 11E3 | 12E3 | 24 |
| | | 13E3 | échec |

Une deuxième série d'essais plus systématique a été effectuée, comme dans la première expérimentation, sur les six types de population déjà testés, en effectuant cinq calculs de 30 mn chacun pour chaque couple panoplie-population. Ces essais ont confirmé que l'utilisation du procédé selon l'invention permet toujours d'égaler, en quelques secondes, l'imbrication manuelle. Les tentatives d'amélioration de l'imbrication manuelle imposent quelques minutes de calcul mais aboutissent dans la plupart des cas.

Ces expérimentations confirment que le procédé selon l'invention assure des imbrications de qualité au moins égale et souvent sensiblement supérieure à celles obtenues avec les procédés manuels utilisés actuellement. Le temps de fabrication et le coût de matière première sont donc généralement réduits. Ce résultat est obtenu au bout d'un temps relativement court et permet d'automatiser complètement la mise en panoplie. On réduit ainsi les coûts de main d'oeuvre et la durée du cycle de mise en panoplie.

**Revendications**

1. Procédé d'imbrication de N pièces élémentaires dans au moins un panneau à usiner, dans lequel ledit procédé consiste à :

   - appliquer un algorithme génétique sur une population de NP individus représentés chacun par au moins un chromosome C constitué ainsi :

     • les pièces à imbriquer sont numérotées à priori de 0 à N-1 ;

   - placer les pièces dans le panneau dans l'ordre et selon l'orientation angulaire définis par le meilleur chromosome obtenu après un temps déterminé d'application dudit algorithme génétique, en utilisant un algorithme de placement donné,

   **caractérisé en ce qu'** un chromosome est une suite ordonnée de couples <..., (INDk, IRk),...>, k = 0,..., N-1 dans laquelle la suite des INDk, k = 0,...,N-1 est une permutation de l'ensemble {0,..., N-1}, représentant l'ordre dans lequel sont placées les pièces et IRk représente une orientation angulaire affectée à la pièce de numéro INDk, cette orientation étant choisie dans une liste des orientations admissibles pour la pièce de numéro INDk.

2. Procédé selon la revendication 1, dans lequel l'application de l'algorithme génétique inclut les opérations consistant à :

   - initialiser la population ;
   - définir une fonction d'évaluation FI(C) des chromosomes C ;
   - calculer la fonction d'évaluation FI(C) pour chacun des NP chromosomes C ;
   - classer les chromosomes C dans l'ordre de leurs fonctions d'évaluations ;
   - affecter à chacun des chromosomes C une probabilité Pr(c) proportionnelle à la place qu'il occupe ;
   - choisir des parents, par tirage au sort, parmi l'ensemble des chromosomes, chaque chromosome C étant tiré au sort avec la probabilité Pr(C) ;
   - effectuer des opérations de croisement des chromosomes parents, pour obtenir des chromosomes enfants ;
   - effectuer des opérations de mutation des chromosomes enfants, pour obtenir des chromosomes enfants modifiés ;

- calculer les fonctions d'évaluation de chacun des chromosomes enfants modifiés ;
- conserver les N1 meilleurs chromosomes parents et les NP-N1 chromosomes enfants ;
- répéter ce cycle pendant le temps déterminé.

3. Procédé selon la revendication 2, dans lequel le nombre NP des chromosomes constituant la population et le nombre N1 des chromosomes parents conservés à la fin de chaque cycle sont choisis dans le groupe comprenant : NP = 8, N1 = 4 ; NP = 12, N1 = 4 ; NP = 12, N1 = 8 ; NP = 20, N1 = 8 ; NP = 20, N1 = 12 ; NP =30, N1 = 10 et NP = 30, N1 = 15.

4. Procédé selon l'une quelconque des revendications 2 et 3, dans lequel on initialise la population en tirant au sort chaque suite <...,INDk,...> parmi les permutations de l'ensemble {0,...,N-1}, et en tirant au sort chaque IRk dans la liste des orientations admissibles pour la pièce de numéro INDk.

5. Procédé selon l'une quelconque des revendications 2 à 4, dans lequel on effectue une opération de croisement en sélectionnant deux sous-suites S1, S2 dans deux chromosomes parents choisis C1, C2, en plaçant les numéros INDk des pièces de la sous-suite S1 dans l'ordre occupé par les mêmes numéros dans le chromosome C2, en procédant de même pour les numéros INDk' des pièces de la sous-suite S2, en utilisant le chromosome C1, et en associant, par tirage au sort, à chacune des pièces des sous-suites S1 et S2, l'un des numéros d'orientation angulaire associés à ce numéro de pièce dans les chromosomes parents C1, C2.

6. Procédé selon la revendication 5, dans lequel on sélectionne deux sous-suites S1, S2 occupant les mêmes positions dans chacun des deux chromosomes.

7. Procédé selon l'une quelconque des revendication 5 et 6, dans lequel les sous-suites S1, S2 sont sélectionnées par tirage au sort.

8. Procédé selon l'une quelconque des revendications 2 à 7, dans lequel on effectue une opération de mutation en inversant au moins deux numéros INDk, INDk' des pièces d'un même chromosome, et en affectant chaque numéro de pièce ainsi inversé d'un nouveau numéro d'orientation angulaire admissible pour cette pièce.

9. Procédé selon la revendication 8, dans lequel les numéros INDk, INDk' des pièces d'un même chromosome, sur lesquels sont effectués les opérations de mutation, sont tirés au sort.

10. Procédé selon l'une quelconque des revendications 8 et 9, dans lequel les nouveaux numéros d'orientation angulaire sont tirés au sort.

11. Procédé selon l'une quelconque des revendications 2 à 10, dans lequel chaque opération de mutation est répétée plusieurs fois sur un même chromosome.

12. Procédé selon l'une quelconque des revendications 2 à 11, appliqué à l'imbrication de pièces en matériau composite, dans lequel on imbrique les N pièces élémentaires dans un seul panneau de très grande longueur, et on utilise une fonction d'évaluation FI(C) définie par FI(C) = -F(C), où F(C) est une fonction de coût correspondant à la longueur utilisée du panneau.

13. Procédé selon l'une quelconque des revendications 2 à 11, appliqué à l'imbrication de pièces métalliques, dans lequel on imbrique les N pièces élémentaires dans plusieurs panneaux identiques, et on utilise une fonction d'évaluation correspondant au taux de remplissage moyen des panneaux.

14. Procédé selon la revendication 13, dans lequel on utilise un algorithme de placement selon lequel chaque pièce est placée prioritairement dans un premier panneau d'un ensemble de panneaux déjà créés, considérés dans l'ordre de leur création et, à défaut, dans un nouveau panneau créé à cet effet.

15. Procédé selon les revendications 5, 8 et 14 combinées, dans lequel, au moins un ensemble de pièces élémentaires identiques étant regroupé sous forme d'un dossier dont toutes les pièces doivent être placées à l'intérieur d'un même panneau :

- on numérote consécutivement toutes les pièces d'un même dossier ;
- on impose que les sous-suites extraites en vue des croisements ne contiennent que des dossiers entiers ;

- on effectue les opérations de mutation en inversant des groupes de numéros consécutifs ne contenant que des dossiers entiers ; et
- on utilise un algorithme de placement selon lequel un nouveau panneau est automatiquement créé si toutes les pièces d'un même dossier ne peuvent être placées sur l'un des panneaux de l'ensemble de panneaux déjà créés, et toutes les pièces du dossier sont placées sur ce nouveau panneau.

16. Procédé selon l'une quelconque des revendication précédentes, dans lequel on utilise un algorithme de placement selon lequel chaque pièce est placée le plus haut et le plus à gauche possible, dans l'ordre indiqué par la suite des INDk.

17. Procédé selon l'une quelconque des revendications précédentes, dans lequel l'application de l'algorithme génétique est précédée d'une étape de mémorisation des contours des pièces, des contours du panneau et des orientations angulaires admissibles pour chacune des pièces, les contours mémorisés des pièces et des panneaux étant utilisés lors du placement des pièces par ledit algorithme de placement.

18. Procédé selon la revendication 16, dans lequel on définit les contours des pièces élémentaires à partir des formes des pièces à réaliser, en ajoutant des marges de sécurité.

19. Procédé selon l'une quelconque des revendications précédentes, dans lequel on imbrique N pièces élémentaires comprenant des pièces prioritaires et des pièces non prioritaires, et on applique l'algorithme génétique sur une population dont chaque individu comprend un premier chromosome représentant l'ensemble des pièces prioritaires, et un deuxième chromosome représentant l'ensemble des pièces non prioritaires.

**Patentansprüche**

1. Verfahren zur Schachtelung von N Elementarteilen in wenigstens einer zu verarbeitenden Platte, bei dem das Verfahren aus den Schritten besteht:

   - Anwenden eines genetischen Algorithmus auf eine Population von NP Individuen, die jeweils durch wenigstens ein Chromosom C dargestellt werden, welches wie folgt gebildet ist:

     • die zu schachtelnden Teile werden à priori von 0 bis N-1 numeriert;

   - Plazieren der Teile in der Platte in der Reihenfolge und gemäß der Winkelorientierung, die durch das beste Chromosom definiert sind, das nach einer bestimmten Zeit der Anwendung des genetischen Algorithmus erhalten wird, wobei man einen gegebenen Plazierungsalgorithmus verwendet,

   **dadurch gekennzeichnet, daß** ein Chromosom eine geordnete Folge von Paaren <..., (INDk, IRk),...>, k = 0,..., N-1 ist, bei der die Folge der INDk, k = 0,..., N-1 eine Permutation der Menge {0,..., N-1} ist, die die Reihenfolge repräsentiert, in der die Teile plaziert sind, und wobei IRk eine dem Teil mit der Nummer INDk zugewiesene Winkelorientierung repräsentiert, wobei diese Orientierung aus einer Liste zulässiger Orientierungen für das Teil mit der Nummer INDk ausgewählt ist.

2. Verfahren nach Anspruch 1, bei dem die Anwendung des genetischen Algorithmus die Operationen beinhaltet, die aus den Schritten bestehen:

   - Initialisieren der Population;
   - Definieren einer Evaluierungsfunktion FI(C) der Chromosomen C;
   - Berechnen der Evaluierungsfunktion FI(C) für jedes der NP Chromosomen C;
   - Ordnen der Chromosomen C in der Reihenfolge ihrer Evaluierungsfunktionen;
   - Zuweisen einer Wahrscheinlichkeit Pr(c) zu jedem der Chromosomen C proportional zu dem Platz, den es einnimmt;
   - Auswählen der Eltern aus der Menge von Chromosomen durch Zufallsziehung, wobei jedes Chromosom C zufällig mit der Wahrscheinlichkeit Pr(C) gezogen wird;
   - Durchführen von Kreuzungsoperationen zwischen den Elternchromosomen, um Kinderchromosomen zu erhalten;
   - Durchführen von Mutationsoperationen zwischen den Kinderchromosomen, um modifizierte Kinderchromosomen zu erhalten;
- Berechnen der Evaluierungsfunktionen jedes der modifizierten Kinderchromosomen;
- Behalten der N1 besten Elternchromosomen und NP-N1 Kinderchromosomen;
- Wiederholen dieses Zyklus während der vorbestimmten Zeit.

3. Verfahren nach Anspruch 2, bei dem die Zahl NP der die Population bildenden Chromosomen und die Zahl N1 der am Ende jedes Zyklus behaltenen Elternchromosomen ausgewählt werden aus der Gruppe umfassend: NP = 8, N1 = 4; NP = 12, N1 = 4; NP = 12; N1 = 8; NP = 20, N1 = 8; NP = 20, N1 = 12; NP = 30, N1 = 10 und NP = 30, N1 = 15.

4. Verfahren nach einem der Ansprüche 2 und 3, bei dem man die Population initialisiert durch Zufallsziehung jeder Folge <..., INDk,...> aus den Permutationen der Menge {0,..., N-1}, und durch Zufallsziehen jedes IRk aus der Liste der für das Teil mit der Nummer INDk zulässigen Orientierungen.

5. Verfahren nach einem der Ansprüche 2 bis 4, bei dem man eine Kreuzungsoperation durchführt, indem man zwei Unterfolgen S1, S2 in zwei ausgewählten Elternchromosomen C1, C2 auswählt, indem man die Nummern INDk der Teile der Unterfolge S1 in der Reihenfolge plaziert, die von den gleichen Nummern im Chromosom C2 eingenommen wird, indem man in gleicher Weise verfährt für die Nummern INDk' der Teile der Unterfolge S2 unter Verwendung des Chromosoms C1, und indem man durch Zufallsziehung jedem der Teile der Unterfolgen S1 und S2 eine der Winkelorientierungsnummern zuweist, die dieser Teilenummer in den Elternchromosomen C1, C2 zugewiesen ist.

6. Verfahren nach Anspruch 5, bei dem man zwei Unterfolgen S1, S2 auswählt, die in jedem der zwei Chromosomen die gleichen Positionen einnehmen.

7. Verfahren nach einem der Ansprüche 5 und 6, bei dem die Unterfolgen S1, S2 durch Zufallsziehung ausgewählt werden.

8. Verfahren nach einem der Ansprüche 2 bis 7, bei dem man eine Mutationsoperation durch Invertieren von wenigstens zwei Nummern INDk, INDk' der Teile ein und desselben Chromosoms durchführt, und indem man jede derart invertierte Teilenummer mit einer neuen Nummer der zulässigen Winkelorientierung für dieses Teil versieht.

9. Verfahren nach Anspruch 8, bei dem die Nummern INDk, INDk' der Teile ein und desselben Chromosoms, bei denen die Mutationsoperationen durchgeführt werden, zufällig gezogen werden.

10. Verfahren nach einem der Ansprüche 8 und 9, bei dem die neuen Winkelorientierungsnummern zufällig gezogen werden.

11. Verfahren nach einem der Ansprüche 2 bis 10, bei dem jede Mutationsoperation bei ein und demselben Chromosom mehrmals wiederholt wird.

12. Verfahren nach einem der Ansprüche 2 bis 11, angewandt auf die Schachtelung von Teilen aus Verbundmaterial, bei dem man die N Elementarteile in einer einzigen Platte mit sehr großer Länge schachtelt, und bei dem man eine Evaluierungsfunktion FI(C) verwendet, die definiert ist durch FI(C) = - F(C), wobei F(C) eine der verwendeten Plattenlänge entsprechende Kostenfunktion ist.

13. Verfahren nach einem der Ansprüche 2 bis 11, angewandt auf die Schachtelung von Metallteilen, bei dem man die N Elementarteile in mehreren identischen Platten schachtelt, und bei dem man eine Evaluierungsfunktion verwendet, die der mittleren Füllrate der Platten entspricht.

14. Verfahren nach Anspruch 13, bei dem man einen Plazierungsalgorithmus verwendet, gemäß dem jedes Teil prioritär in einer ersten Platte einer Gruppe von bereits erzeugten Platten plaziert wird, die in der Reihenfolge ihrer Erzeugung betrachtet werden, und andernfalls in einer zu diesem Zweck erzeugten neuen Platte.

15. Verfahren nach den kombinierten Ansprüchen 5, 8 und 14, bei dem wenigstens eine Gruppe von identischen Elementarteilen in Form einer Anordnung neu gruppiert wird, deren sämtliche Teile innerhalb ein und derselben Platte plaziert sein müssen, und bei dem:

- man nacheinander alle Teile ein und derselben Anordnung numeriert;
- man vorgibt, daß die im Hinblick auf die Kreuzungen ausgewählten Unterfolgen nur ganze Anordnungen enthalten;
- man die Mutationsoperationen durch Invertieren von Gruppen aufeinanderfolgender Nummern durchführt, die nur ganze Anordnungen enthalten; und
- man einen Plazierungsalgorithmus verwendet, gemäß dem automatisch eine neue Platte erzeugt wird, wenn nicht alle Teile ein und derselben Anordnung auf einer der Platten der Gruppe bereits erzeugter Platten plaziert werden können, und alle Teile der Anordnung auf dieser neuen Platte plaziert werden.

16. Verfahren nach einem der vorhergehenden Ansprüche, bei dem man einen Pfazierungsalgorithmus verwendet, gemäß dem jedes Teil möglichst weit oben und möglichst weit links plaziert wird, und zwar in der durch die Folge der INDk angegebenen Reihenfolge.

17. Verfahren nach einem der vorhergehenden Ansprüche, bei dem der Anwendung des genetischen Algorithmus ein Schritt der Speicherung der Umrisse der Teile, der Umrisse der Platte und der für jedes der Teile zulässigen Winkelorientierungen vorhergeht, wobei die gespeicherten Umrisse der Teile und der Platten während der Plazierung der Teile durch den Plazierungsalgorithmus verwendet werden.

18. Verfahren nach Anspruch 16, bei dem man die Umrisse der Elementarteile ausgehend von den Formen der herzustellenden Teile definiert, wobei man Sicherheitsränder hinzufügt.

19. Verfahren nach einem der vorhergehenden Ansprüche, bei dem man N Elementarteile schachtelt, die Prioritärteile und Nicht-Prioritärteile umfassen, und bei dem man den genetischen Algorithmus auf eine Population anwendet, in der jedes Individuum ein die Gruppe der Prioritärteile repräsentierendes erstes Chromosom sowie ein die Gruppe der Nicht-Prioritärteile repräsentierendes zweites Chromosom umfaßt.

## Claims

1. Method for interleaving N elementary parts into at least one panel to be machined, wherein said method consists of:

   - applying a genetic algorithm to a population of NP individuals, each represented by at least one chromosome C constituted through the parts to be interleaved being a prior numbered 0 to N-1,
   - placing the parts in the panel in the order and angular orientation defined by the best chromosome obtained after a predetermined application time of said genetic algorithm using a given placement algorithm, **characterized in that** a chromosome is a well-ordered sequence of pairs <..., (INDk, IRk), ...>, k = 0, ..., N-1 in which the sequence of INDk, k = 0, ..., N-= is a permutation of {0, ..., N-1}, representing the order in which the parts are placed and IRk representing an angular orientation allocated to the part of number INDk, said orientation being chosen from within a list of admissible orientations for the part of number INDk.

2. Method according to claim 1, wherein the application of the genetic algorithm includes operations consisting of:

   - initializing the population,
   - defining an evaluation function FI(C) of the chromosomes C,
   - calculating the evaluation function FI(C) for each of the NP chromosomes C,
   - classifying the chromosome C in the order of their evaluation functions,
   - allocating to each of the chromosomes C a probability Pr(c) proportional to the place which it occupies,
   - choosing parents, by drawing lots, among the group of chromosomes, each chromosome C being lot-drawn with the probability Pr(C),
   - performing parent chromosome crossing operations to obtain child chromosomes,
   - performing the child chromosome mutation operations to obtain modified child chromosomes,
   - calculating the evaluation functions of each of the modified child chromosomes,
   - retaining the N1 best parent chromosomes and the NP-N1 child chromosomes,
   - repeating the cycle for the predetermined time.

3. Method according to claim 1, wherein the number NP of chromosomes constituting the population and the number N1 of parent chromosomes retained at the end of each cycle are chosen in the group comprising: NP = 8, N1 = 4, NP = 12, N1 = 4; NP = 12, N1 = 8; NP = 20, N1 = 8; NP = 20, N1 = 12; NP = 30, N1 = 10 and NP = 30, N1 = 15.

4. Method according to either of the claims 2 and 3, wherein the population is initialized by drawing lots for each sequence <..., INDk, ...> among the permutations of the group {0, ..., N-=}, and drawing lots for each IRk in the list of admissible orientations for the part of number INDk.

5. Method according to any one of the claims 2 to 4, wherein a crossing operation is performed by selecting two subsequences S1, S2 in two chosen parent chromosomes C1, C2, by placing the numbers INDk of the parts of the subsequence S1 in the order occupied by the same numbers in the chromosome C2, by proceeding in the same way for the numbers INDk' of the parts of the subsequence S2, by using the chromosome C1, and by associating, by drawing lots, with each of the parts of the subsequences S1 and S2, one of the angular orientation numbers associated with said part number in the parent chromosomes C1, C2.

6. Method according to claim 5, wherein a selection is made of two subsequences S1, S2 occupying the same positions in each of the two chromosomes.

7. Method according to either of the claims 5 and 6, wherein the subsequences S1, S2 are selected by drawing lots.

8. Method according to any one of the claims 2 to 7, wherein a mutation operation is performed by inverting at least two numbers INDk, INDk' of the parts of the same chromosome and by allocating to each thus inverted part number a new admissible angular orientation number for said part.

9. Method according to claim 8, wherein the numbers INDk, INDk' of the parts of the same chromosome, on which the mutation operations are performed, are lot-drawn.

10. Method according to either of the claims 8 and 9, wherein the new angular orientation numbers are lot-drawn.

11. Method according to any one of the claims 2 to 10, wherein each mutation operation is performed several times on the same chromosome.

12. Method according to any one of the claims 2 to 11, applied to the interleaving of composite material parts, wherein the N elementary parts are interleaved into a very long panel, and use is made of an evaluation function FI(C) defined by FI(C) = -F(C), in which F(C) is a cost function corresponding to the panel length used.

13. Method according to any one of the claims 2 to 11, applied to the interleaving of metal parts, wherein the N elementary parts are interleaved into several identical panels, and use is made of an evaluation function corresponding to the mean filling level of the panels.

14. Method according to claim 13, wherein use is made of a placement algorithm, according to which each part is placed in priority manner in a first panel of a group of already created panels, considered in the order of their creation and, lacking this, in a new panel created for this purpose.

15. Method according to claims 5, 8 and 14 combined, wherein at least one group of identical elementary parts is collected in the form of a file, whereof all the parts must be placed within the same panel:

   - all the parts of the same file are numbered consecutively,
   - a requirement is that subsequences extracted for crossing purposes only contain complete files,
   - mutation operations are performed by inverting consecutive number groups only containing complete files and
   - use is made of a placement algorithm, according to which a new panel is automatically created if all the parts of the same file cannot be placed on one of the panels of the already created group of panels, and all the parts of the file are placed on said new panel.

16. Method according to any one of the preceding claims, wherein use is made of a placement algorithm, according to which each part is placed as high and as far to the left as possible in the order indicated by the INDk sequence.

17. Method according to any one of the preceding claims, wherein the application of the genetic algorithm is preceded by a stage of storing contours of parts, contours of the panel and admissible angular orientations for each of the parts, the stored contours of the parts and panels being used during the placement of the parts by said placement algorithm.

**18.** Method according to claim 16, wherein the contours of the elementary parts are defined on the basis of the shapes of the parts to be produced, by adding safety margins.

**19.** Method according to any one of the preceding claims, wherein N elementary parts comprising priority parts and non-priority parts are interleaved, and the genetic algorithm is applied to a population, whereof each individual comprises a first chromosome representing all the priority parts and a second chromosome represents all the non-priority parts.

```
┌──────────────────────┐
│    INITIALISATION     │
│     POPULATION        │
└──────────────────────┘
            │
            ▼
┌──────────────────────┐
│╔════════════════════╗│
│║     POPULATION     ║│
│╚════════════════════╝│
└──────────────────────┘
            │
            ▼
┌──────────────────────┐
│   CHOIX DES PARENTS   │
└──────────────────────┘
            │
            ▼
┌──────────────────────┐
│     CROISEMENTS       │
└──────────────────────┘
            │
            ▼
┌──────────────────────┐
│╔════════════════════╗│
│║      ENFANTS       ║│
│╚════════════════════╝│
└──────────────────────┘
            │
            ▼
┌──────────────────────┐
│      MUTATIONS        │
└──────────────────────┘
            │
            ▼
┌──────────────────────┐
│╔════════════════════╗│
│║      ENFANTS       ║│
│║      MODIFIES      ║│
│╚════════════════════╝│
└──────────────────────┘
            │
            ▼
┌──────────────────────────┐
│  EVALUATION ET SELECTION  │
│  DES PARENTS ET ENFANTS   │
│        A GARDER           │
└──────────────────────────┘
            │
            ▼
┌──────────────────────┐
│╔════════════════════╗│
│║     NOUVELLE       ║│
│║     POPULATION     ║│
│╚════════════════════╝│
└──────────────────────┘
```

FIG. 1

FIG. 2

Orientations
angulaires possibles :
0 : 0°
1 : 90°

Orientations
angulaires possibles :
0 : 0°
1 : 90°

Orientations
angulaires possibles :
0 : 0°
1 : 90°
2 : 180°
3 : 270°

CHROMOSOME : <(4 0) (1 1) (2 0) (6 2) (5 3) (3 0) (0 1) >

$F(c) = L$

FIG. 3

$$C1 = < (4\ 0)\ (1\ 1)\ \overline{(2\ 0)\ (6\ 2)\ (5\ 3)}\ (3\ 0)\ (0\ 1) >$$

S1

$$C2 = < (1\ 0)\ (5\ 1)\ \overline{(0\ 1)\ (4\ 0)\ (2\ 1)}\ (3\ 1)\ (6\ 3) >$$

S2

OPERATEUR DE CROISEMENT

$$C'1 = < (4\ 0)\ (1\ 1)\ (5\ 1)\ (2\ 1)\ (6\ 3)\ (3\ 0)\ (0\ 1) >$$

$$C'2 = < (1\ 0)\ (5\ 1)\ (4\ 0)\ (2\ 0)\ (0\ 1)\ (3\ 1)\ (6\ 3) >$$

FIG. 4

E1                E2

$$C = < \overline{(3\ 0)}\ (2\ 0)\ (5\ 1)\ (0\ 1)\ \overline{(6\ 3)}\ (4\ 1)\ (1\ 0) >$$

OPERATEUR DE MUTATION

$$C' = < (6\ 2)\ (2\ 0)\ (5\ 1)\ (0\ 1)\ (3\ 0)\ (4\ 1)\ (1\ 0) >$$

FIG. 5